# EUROPEAN PATENT SPECIFICATION

(11) **EP 3 185 692 B1**
(45) Date of publication and mention of the grant of the patent: **06.04.2022**
(21) Application number: 15835769.9
(22) Date of filing: 26.08.2015
(51) Int. Cl.: A23G 1/32, A23D 9/02, C11B 1/00, A23D 9/04, A23G 1/30, A23G 1/36, A23G 3/34, A23G 3/54, A23G 9/48, C11C 3/10, A23G 1/56

(54) **EDIBLE FAT COMPOSITION**
ESSBARE FETTZUSAMMENSETZUNG
COMPOSITION DE MATIÈRE GRASSE COMESTIBLE

(30) Priority: 29.08.2014 SE 1451005
(43) Date of publication of application: 05.07.2017
(73) Proprietor: AAK AB (Publ), 215 32 Malmö (SE)
(72) Inventor: JUUL, Bjarne, DK-8310 Tranbjerg J (DK)
(74) Representative: Patentgruppen A/S
(86) International application number: PCT/SE2015/050904
(87) International publication number: WO 2016/032392

(56) References cited:
- EP-A1- 0 139 177
- EP-A1- 2 030 510
- EP-A1- 2 740 369
- EP-A1- 2 740 369
- WO-A1-95/03708
- WO-A1-98/34496
- WO-A1-2009/090416
- WO-A1-2012/139574
- GB-A- 1 390 936
- US-A- 5 405 639

## Description

### TECHNICAL FIELD

The present invention relates to the field of edible vegetable fats. More particularly, the invention relates to a cocoa biomass with a modified fat profile as well as a process of making such modified cocoa liquor or cocoa powder and edible products made thereof.

### BACKGROUND

Cocoa powder is the low fat powder that remains after removal of cocoa butter from the cocoa liquor. The fat in cocoa powder is cocoa butter. Standard cocoa powder has a cocoa butter fat content of approximately 10-24%, but on the market today there are three different main groups of cocoa powder (CPo) depending on their cocoa butter fat content. The three different groups are i) <1%, ii) 10-12%, iii) 22-24%.

Cocoa has become one of the most popular food types and flavors in the world, and a vast number of foodstuffs involving chocolate have been created. Cocoa powder is thus widely used in bakery, chocolate, dairy, as well as in candy.

Cacao butter contains a high proportion of saturated fats, derived from stearic and palmitic acids. Saturated fats are considered unhealthy.

This, together with the fact that it is often mixed with other vegetable or non-vegetable fats, such as milk fat, sets a high demand on cocoa powder for good compatibility in different types of products and applications, including compatibility with other vegetable and non-vegetable fats, such as milk fat.

Specialty fats for chocolates include cocoa butter equivalent (CBE), cocoa butter substitute (CBS) as well as cocoa butter replacers (CBR). CBE is considered fully compatible with cocoa butter. CBS and CBR are used to partially replace cocoa butter, particularly where price consideration is important. However, due to this partial replacement, the compatibility with cocoa butter is relevant. CBR and CBS are different from cocoa butter triglycerides and thus there is only a certain degree of compatibility with cocoa butter meaning that only up to a certain amount may be replaced before the characteristics of the mix changes too much. For example, the eutectic effect of such a mix may be too severe.

Today, means for solving compatibility issues is mainly to use solvent extracted cocoa powder which decreases the level or removes the cocoa butter. Common solvents to use for extraction of cocoa powder is hexane and acetone. Processes using extraction with solvents are expensive and also brings about disposal handling of the solvents when used.

There is thus a need for a cocoa powder with enhanced compatibility with a diversity of other vegetable fats, as well as providing a healthier fat profile, when so desired. The present invention addresses such needs and interests.

### SUMMARY

In one aspect, the present invention relates to a process for preparing a cocoa biomass with a modified fat phase, said process comprising the steps of
a) mixing cocoa biomass having a fat phase 1, wherein said fat phase is cocoa butter (CB), with a vegetable fat phase 2, said fat phase 1 and fat phase 2 forming a modified fat phase 3 in the mixture,
b) separating the cocoa biomass from modified fat phase 3 to a desired fat level, wherein the desired fat level is 0.1-70 wt% of said cocoa biomass, wherein
   said cocoa biomass now have a residual modified fat phase 3 at a desired fat level
   replacing fat phase 1 and wherein excess of fat phase 3 is removed, and wherein the residual modified fat phase 3 is substantially a combination of fat phase 1 and fat phase 2, and
c) optionally, repeating step a) and b) above, wherein the vegetable fat phase 2 is not CB.

Further embodiments of the process and any of its embodiments are wherein the desired fat level is 0.1-25 wt% of said cocoa biomass, or even 1-10wt%, 1-5wt%, 5-10wt%, 10-12 wt%, or 12-25wt%.

Still even further embodiments of the process and any of its embodiments are, wherein said fat phase 1 and fat phase 2 is mixed in a weght ratio of 1:1 to 1:1000 of fat phase 1: fat phase 2 or in a ratio of 1:1 to 1000:1 of fat phase 1:fat phase 2.

Even further embodiments of the process and any of its embodiments, wherein said fat phase 1 and fat phase 2 is mixed in a weight ratio of any one selected from the group consisting of 1:1, 1:2, 1:5, 1:10, 1:20, 1:25, 1:30, 1:40, 1:50, 1:60, 1:70, 1:75, 1:80, 1:90 and 1:100 of fat phase 1: fat phase 2.

Still further embodiments of the process and any of its embodiments are wherein said process further comprises adding at least one selected from the group consisting of emulsifiers, milk solid, milk fat, salt, enzyme, such as an enzyme for interesterification, any other ingredient within confectionary, such as compound or chocolate making, baking and food industry.

Even further embodiments of the process and any of its embodiments are wherein said vegetable fat phase 2 is at least one selected from the group consisting of palm oil, palm kernel oil, soybean oil, coconut oil, shea oil, a liquid oil such as sunflower oil or rape seed oil, and fractions thereof.

Even further embodiments of the process according to any of its embodiments are wherein said at vegetable fat phase 2 is hydrogenated and/or interesterified.

In further embodiments, the process and any of its embodiments are wherein said mixing is for 0.5 to 6 h.

In still further embodiments of the process and any of its embodiments are wherein said mixing is continuous.

In still further embodiments, the process and any of its embodiments are wherein said mixing is done at 25 to 60°C.

In even further embodiments, the process and any of its embodiments are wherein said process further comprising the step of interesterifying said fat phase 3 with modified fat profile together with the cocoa biomass.

In still even further embodiments of the process and any of its embodiments are wherein fat phase 1 is CB and fat phase 2 is a CBR or a CBS.

In even further embodiments, the process and any of its embodiments are wherein fat phase 1 is CB and fat phase 2 is a hydrogenated palm kernel oil, optionally interesterified.

In still further embodiments of the process and any of its embodiments are wherein fat phase 1 is CB and fat phase 2 is a liquid oil, such as sun flower oil, high oleic sunflower oil or rape seed oil.

A further aspect of the invention relates to the use of the process according and any of its embodiments are for preparing a cocoa biomass with a modified fat profile compared to unmodified cocoa biomass.

An even further aspect of the invention relates to a cocoa biomass with a modified fat profile compared to unmodified cocoa biomass.

Said cocoa biomass with a modified fat profile and any of its embodiments may be prepared using the process and any of its embodiments as described herein.

An even further aspect of the invention relates to a fat composition for an edible product comprising cocoa biomass with a modified fat profile prepared using the process according to any its embodiments, or the cocoa biomass as described herein according to any of its embodiments.

A further aspect of the invention relates to its use of a cocoa biomass with a modified fat profile prepared by the process according to any of its embodiments, or the cocoa biomass according to any of its embodiments or the fat composition as described herein in an edible product.

Further embodiments of said use are wherein said fat composition is a filling fat, a CBR, a CBS, a spread, a or coating.

Still further embodiments of said use according to any of its embodiments are wherein said edible product is a confectionary product, a dairy product, or a bakery product.

Still further embodiments of said use according to any of its embodiments are wherein said confectionary product is selected from the group consisting of a chocolate, a compound, a filling, a filled chocolate product, filled and topped confectionary products, a spread, a coating, a molded tablet of compound or chocolate, a cream, a frozen product, such as an ice cream, a healthy cocoa milk drink, a culinary product including filled and topped culinary products, a dough or a baked product, a solid fat ingredient for food products.

A further aspect of the invention is an edible product comprising the cocoa biomass with modified fat profile prepared using the process according to any of its embodiments, or the cocoa biomass according to any of its embodiments, or the fat composition according to any of its embodiments, wherein the edible product is a dairy product, a confectionary product or a bakery product.

In even further embodiments, the edible product is a dairy product and wherein the dairy product is selected from the group consisting of a milk, a margarine, a butter blend, a liquid cream, a whipping cream, a sour cream, a hard cheese, a soft cheese, a processed cheese, a fresh cheese, a yoghurt and an ice cream.

In still even further embodiments, the edible product is a confectionary product and wherein said confectionary product is a chocolate, a compound, a filling, a filled chocolate product, filled and topped confectionary products, a spread, a coating, a molded tablet of compound or chocolate, a cream, a frozen product, such as an ice cream, a culinary product including filled and topped culinary products, a dough or a baked product, a solid fat ingredient for food products.

Further embodiments are wherein the edible product is a bakery product and wherein said bakery product is a dough, a baked product, a biscuit, a cookie, or an extruded product.

The cocoa powder with a modified fat profile will ad in new and beneficial characteristics to the cocoa powder depending on the choice of said at least one vegetable fat, i.e. fat phase 2, in the process described herein. Such new and improved characteristics include, as a matter of choice, better texture, much less eutectic effect, enhanced bloom stability, enhanced gloss and even enhances sensory characteristics or a more healthy profile. The method according to the invention further avoids usage of solvents for extraction and is thus cheaper, simplify handling and is more environmental friendly.

### DETAILED DESCRIPTION

### Definitions

As used herein, cocoa biomass is intended to mean any biomass from the cocoa bean, sliced, squashed or mashed, as well as the cocoa nibs, optionally roasted, grinded or not, the cocoa liquor (CLi), as well as the cocoa powder (CPo).

As used herein, the term "unmodified cocoa biomass" is intended to mean that the cocoa biomass comprises only cocoa butter (CB) as a fat phase with a triglyceride, or fat, composition as naturally found in cocoa biomass. The amount of CB in the cocoa biomass may differ, for example if it is presses, extracted or in any other way separated and removed from the solid parts of the cocoa biomass or not. There is also a natural variation of CB in the cocoa biomass due to natural variations in plants and its growth of origin. The separation and removing changes the amount if CB in the cocoa biomass, but does not change the actual triglyceride, or fat, composition in the fat phase.

As used herein, the term "modified cocoa biomass" is intended to mean that the cocoa biomass have been through the process according to the invention, if nothing else is specifically stated. This means that the triglycerides, or fats, in the CB is interchanged to other triglycerides, or fats, in the cocoa biomass, thus the fat phase, that is originally the pure CB, is changed/modified and the cocoa biomass is accordingly "modified cocoa biomass" compared to "unmodified cocoa biomass".

As used herein, a "compound" or "chocolate compound" is a chocolate like product mass from a combination of cocoa, vegetable fat and sweeteners, and sometimes also some milk ingredients. It is used as a low-cost alternative to true chocolate and make use of hard vegetable fats like fractions of palm kernel oil and/ or cocoa nut oil that may be interesterified or not and/or hydrogenated in place of the more expensive cocoa butter.

As used herein, the term "fatty acid" encompasses fatty acid residues in triglycerides.

As used herein "Rx" is an abbreviation of "interesterified".

As used herein "Hd" is an abbreviation of "hydrogenated".

As used herein F.H. is an abbreviation of "fully hydrogenated".

As used herein "edible" is something that is suitable for use as food or as part of a food product, such as a dairy product. An edible fat is thus suitable for use as fat in food or food product and an edible composition is a composition suitable for use in food or a food product, such as a dairy product.

As used herein, "%" or "percentage" all relates to weight percentage i.e. wt% or wt-% if nothing else is indicated.

As used herein, the singular forms "a", "and" and "the" include plural referents unless the context clearly dictates otherwise.

As used herein, "at least one" is intended to mean one or more, i.e. 1, 2, 3, 4, 5, 6, 7, 8, 9, 10, etc

As revealed above, cocoa biomass, including but not limited to cocoa liquor (CLi) and cocoa powder (CPo), comprising cocoa butter naturally in a certain % will have a varying degree of compatibility with other vegetable and non-vegetable fats. This compatibility aspect have put a demand on the vegetable fat to be mixed with cocoa biomass, including but not limited to cocoa liquor (CLi) and cocoa powder (CPo), to be as similar to the cocoa butter fat as possible in order to make them blend easier. The specialty fats existing today for this purpose i.e. to be blended with the cocoa butter in cocoa powder for applications in e.g. chocolates thus include cocoa butter equivalent (CBE), cocoa butter substitute (CBS) as well as cocoa butter replacers (CBR), all with different degrees of compatibility.

The present invention reverses the concept and instead modifies the fat naturally found in the cocoa biomass, including but not limited to cocoa liquor (CLi) and cocoa powder (CPo), that is the cocoa butter, to increase the compatibility with other vegetable and non-vegetable fats to be blended with. Said modified cocoa biomass will, as revealed herein, have at least the same but also in most cases have better characteristics, compared to when unmodified cocoa biomass is used.

Also, as a source of saturated fatty acids, health aspects are well considered when using cocoa butter containing fat sources, such as cocoa biomass, including but not limited to cocoa liquor (CLi) and cocoa powder (CPo). Accordingly, a further benefit of the invention is thus that by changing the cocoa butter fat in the cocoa biomass, including but not limited to cocoa liquor (CLi) and cocoa powder (CPo), to a healthier vegetable fat, such health aspect may be considered when making the choice of the vegetable fat (fat phase 2) to a healthier fat.

Further benefits are that other features of the fat, such as structure, heat stability, bloom and re-crystallization, may also be addressed by making the choice of fat to replace the cocoa butter in the cocoa biomass, including but not limited to cocoa liquor (CLi) and cocoa powder (CPo).

Surprisingly, not only adding new benefits to the cocoa biomass, including but not limited to cocoa liquor (CLi) and cocoa powder (CPo), is achieved by modifying the fat phase in the cocoa biomass, but also much better effects is seen. For example, by using a cocoa biomass with a modified fat profile, compared to the unmodified cocoa biomass, the inventors have surprisingly found a significantly improved bloom stability, significantly harder texture, and more snap than their reference using unmodified cocoa biomass.

Further, less eutectic effect by using cocoa biomass including but not limited to CLi and CPo made with the process according to the invention instead of standard cocoa biomass, said modified cocoa biomass will for example provide a longer shelf life without any recrystallization, still keeping and even improving the cocoa taste.

Also, by using a cocoa biomass with a modified fat phase the inventors surprisingly found that they could reach the same cocoa taste and keep a longer shelf life without any recrystallization or even a much stronger cocoa taste and still get a significant better shelf life regarding recrystallization at lower storage temperature.

Further, by changing from a standard cocoa biomass to a mixture of modified cocoa biomasses a more pleasant cocoa taste and better shelf life at lower storage temperature was seen, compared to when using an unmodified cocoa biomass.

Even further, since the compatibility with other vegetable fats will increase by using said modified cocoa biomass, including but not limited to CLi and CPo, less or even substantially no eutectic effect is seen using the modified cocoa biomass according to the invention. This also means that fat composition, and thereby also edible products made thereof, may have a higher amount of cocoa biomass included, thereby maintaining and even enhancing cocoa taste in said product. This is highly desired in some products where a maximum of f.ex. 5% of cocoa biomass is normally recommended due to the eutectic effect with other fats, vegetable or non-vegetable such as milk fats.

This, along with a more favorable pricing gives a demand for a modified cocoa biomass, including but not limited to cocoa liquor (CLi) and cocoa powder (CPo), with enhanced compatibility with a diversity of other vegetable and non-vegetable fats, such as but not limited to CBR, CBS, rape seed and sun flower oil, e.g. high oleic sun flower oil, and milk fat as well as providing new features like a healthier fat profile, such as decreasing levels of saturated fatty acids, when so desired. The present invention addresses such needs and interests by providing a process to modify the fat phase, e.g the triacylglycerol (TAG) composition, of the cocoa butter part of cocoa biomass, including but not limited to cocoa liquor (CLi) and cocoa powder (CPo). The use of the process as described herein for preparing a cocoa biomass, including but not limited to cocoa liquor (CLi) and cocoa powder (CPo), with a modified fat phase will also help the food industry to overcome other obstacles relating to cooling processes, including tempering processes, as well as improving bloom characteristics, rheological properties in production lines, and stability in hot climates, including retarding re-crystallization from cocoa butter, etc. all depending on final fat phase (fat phase 3), e.g. TAG composition, in the modified cocoa biomass, including but not limited to cocoa liquor (CLi) and cocoa powder (CPo).

The inventors have surprisingly found an easy method to modify the fat phase, e.g. the TAG composition, herein also called the "TAG profile" in cocoa biomass, including but not limited to cocoa liquor (CLi) and cocoa powder (CPo).

Cocoa liquor (CLi) made from the ground nibs have a high content of cocoa butter (CB), up to 55-56% of CB. Standard cocoa powder (CPo) has a cocoa butter fat content of approximately 10-24%, but on the market today there are three different main groups of cocoa powder (CPo) depending on their cocoa butter fat content. The three different groups of CPo are i) <1%, ii) 10-12%, iii) 22-24% cocoa butter fat containing CPo. A CPo with <1% encompass CPo without any CB, i.e. fat free cocoa powder and cocoa powder having 0.1, 0.2, 0.3, 0.4 % CB. The method according to the invention is applicable to all cocoa biomass, including but not limited to cocoa liquor (CLi) and cocoa powder (CPo) irrespectively of its CB content as a start, thus also encompassing CLi, as well as its CPo made from pressing and/or extraction of said CLi, including all CPo with 0, 0.1. 0.2, 0.3, 0.4, and 0.5% CB and up to 56% CB known in the art. For CPo having 0%-0,5% CB, that is fat free CPo, the TAG profile modification encompass providing a TAG profile to a CPo having no, or very low such as 0.1-0.5% CB (i.e. considered normally in the art as being no CB) wherein said modified fat profile is different from pure CB.

Accordingly, in one aspect, the present invention provides a process for preparing a cocoa biomass that from the start has an unmodified fat phase, hereinafter named fat phase 1, with a modified fat phase, hereinafter named fat phase 3. Said cocoa biomass is including but not limited to cocoa liquor (CLi) and cocoa powder (CPo) having about 0-70% CB, such as about 0, <1, 5, 10-12, or about 22-24, or about 55-56% , or about 55-60% unmodified CB or about 60-65% or even up to about 70% unmodified CB. Said process prepares the cocoa biomass with a modified fat phase (fat phase 3), said process comprises the steps of a) mixing cocoa biomass, including but not limited to cocoa liquor (CLi) and cocoa powder (CPo), having a fat phase 1 with a vegetable fat phase 2, such vegetable fat phase 2 not being cocoa butter, and wherein said fat phase 1 and fat phase 2 forms a modified fat phase 3 in the mixture,
b) separating cocoa biomass from the mixture of fat phase 1 and fat phase 2, i.e. fat phase 3, to a desired fat level, wherein said cocoa biomass now have a residual modified fat phase 3 at a desired fat level replacing fat phase 1 and wherein excess of fat phase 3 is removed, and, optionally, repeating step a) and b) above.

The separation in b) separates fat phase 3, i.e. the mixture of fat phase 1 and fat phase 2, again from the rest of the solid parts of the cocoa biomass, including but not limited to cocoa liquor (CLi) and cocoa powder (CPo). This separation may be identical or similar to what is done when separating CB from CLi to generate CPo. The separation is done to a desired fat level of the cocoa biomass, including but not limited to cocoa liquor (CLi) and cocoa powder (CPo), for example <1%, such as 0.1, 0.2, 0.3, 0.4, 0.5, or 10-12%, 22-24% or 55-56% or 55-60% fat, or even 60-70% or any other desired fat level.

The separation may be done by pressing such as hydraulic pressing know in the art, or any other means for physical separation of fat from cocoa solids, such as pressing (mechanical or with pressure), centrifugation, filtration, such as vacuum filtration or other similar physical means. The separation may also be done by chemical means, such as extraction, e.g. hexane or acetone. Chemical extraction methods are used when mechanical means, such as pressing, is not enough, e.g. to get a fat level of the cocoa biomass below about 10%. Thus, in further embodiments of the process according to the invention, at least one of mechanical means, chemical means and a mixture thereof may be used for the separation of the cocoa biomass, including but not limited to cocoa liquor (CLi) and cocoa powder (CPo) and fat phase 3, i.e. the mixture of fat phase 1 and 2 in the cocoa biomass.

The inventors surprisingly found that mixing cocoa biomass, including but not limited to cocoa liquor (CLi) and cocoa powder (CPo), said cocoa biomass comprising a fat phase 1 with at least one other vegetable fat, i.e. fat phase 2, in a particular weight ratio before separation will dilute said fat phase 1, e.g. CB, giving a final residual fat phase 3 in exact corresponding weight ratios as the initial mix after the separation. Thus, a cocoa biomass being CPo having 10-12% of a fat phase 1, i.e. being pure CB in fat phase 1, will after mixing in a ratio of 10:1 of fat phase 2:fat phase 1 dilute the fat phase 2, e.g. being CB, in a corresponding ratio. Thus, if the corresponding mixture, i.e. fat phase 3, is separated down to a fat level of about 10-12%, the final CB content of the new modified cocoa biomass, including but not limited to cocoa liquor (CLi) and cocoa powder (CPo), have only 1-1.2% of CB, i.e. fat phase 1, and the rest being the other vegetable fat added, i.e. fat phase 2, however both fat parts being fully blended. The same applies for all types of cocoa biomass, including but not limited to cocoa liquor (CLi) and cocoa powder (CPo), irrespectively of what fat content there is from the start. Further embodiments are also wherein said modified cocoa biomass comprises both modified CLi and modified CPo.

Fat phase 1 is CB.

Fat phase is not CB, but at least one other vegetable fat, such as e.g. a fat blend. Such vegetable fats, of fat blends are further exemplified herein.

Further embodiments of the process is wherein the ratio of fat phase 2, e.g. one other vegetable fat, and fat phase 1, cocoa butter, in the cocoa biomass, including but not limited to cocoa liquor (CLi) and cocoa powder (CPo), is blended in any weight ratio, for example in the range of 1:1 to 10:1 of the vegetable fat phase 2:cocoa butter, such as 1:1, 2:1, 3:1, 4:1, 5:1, 6:1, 7:1, 8:1, 9:1 or 10:1 or any other ration mentioned herein. There is no clear limitations in the ration used, but the application and desired characteristics along with use will guide the skilled man to what ration to use for diluting the fat phase, in the cocoa biomass.

Still further embodiments are wherein the ratio of said fat phase 2, the at least one other vegetable fat, and fat phase 1, cocoa butter, in the cocoa biomass, including but not limited to cocoa liquor (CLi) and cocoa powder (CPo), is blended in any weight ratio in the range of 10:1, 15:1, 20:1, 25:1, 30:1, 40:1, 50:1, 60:1, 70:1, 75:1, 80:1, 90:1, 100:1, 200:1. 500:1 or even 1000:1 of fat phase 2:fat phase 1.

Even further embodiments are wherein the ratio of said fat phase 2, the at least one other vegetable fat, and fat phase 1, cocoa butter in the cacao powder is blended in any weight ratio in the range of 1:1, 1:2, 1:3, 1:4, 1:5, 1:6, 1:7, 1:8, 1:9, 1:10, 1:20, 1:25, 1:30, 1:40, 1:50, 1:60, 1:70, 1:75, 1:80, 1:90, 1:100, 1:200, 1:500 or even 1:1000 of fat phase 2:fat phase 1. The inventors have surprisingly seen that the ratio used when mixing fat phase 2 and the cocoa biomass including fat phase 1 will be the ratio substantially kept of the vegetable fat phase 3 remaining as a residual modified fat phase 3 in the cocoa biomass after mixing, i.e. blending, and separation, done by e.g. pressing. Thus, said process is a process wherein the residual modified fat phase 3 is substantially a combination of fat phase 1 and fat phase 2. The inventors found this was not the case in other vegetable and non-vegetable biomasses tested. The process may then optionally be repeated till a final desired cocoa biomass, including but not limited to cocoa liquor (CLi) and cocoa powder (CPo) with a desired fat content and fat profile is reached, thus diluting the fat phase 1, cocoa butter, originally found in the cocoa biomass, including but not limited to cocoa liquor (CLi) and cocoa powder (CPo).

Fat phase 2, the at least one other vegetable fat, is herein intended to mean any other vegetable fat and not cocoa butter.

There is no particular limitation to what fat phase 2 may be, apart from being a vegetable fat and not cocoa butter. It is all but CB. Examples of such vegetable fats that may be used are given herein, and may, without being limited to thereof, be e.g. a cocoa butter replacer (CBR), a cocoa butter substitute (CBS), or a cocoa butter equivalent (CBE) or any other vegetable fat or blends thereof such as a filling fats or any other fat phase f.ex. as exemplified further herein

Said mixing may for example done by a mere blending of the two or more components, after adding all, e.g. the cocoa liquor or cocoa powder and said at least one vegetable fat, in a for its purpose suitable sized container.

The mixing time is not limited in any way, but may be done f.ex. for 0.5-10h, such as 1-5h, e.g. for 1, 2, 3, 4 or 5h at any temperature, in some embodiments above 34°C, such as 40, 45, 50, 55, 60, 65, 70, 75, 80, 85, 90, 95 or even 100°C and above, or at a lower temperature such as 20, 25, 27, 29, 30, 31, 32, or 33 °C. Sometimes, depending on the application and other ingredients, it is desired to keep the temperature below 70-72°C during mixing. This is particularly useful in embodiments where a subsequent enzymatic component is part of the mixing and the subsequent separation conditions, such as in further embodiments described herein using enzymatic interesterification of fat phase 3 before separation from the cocoa biomass or after separation of the cocoa biomass with remaining fat phase at a desired fat level. The inventors surprisingly found that mixing at a temperature >72°C, such as 90°C or even higher, works equally well as a temperature below 72°C. However, due to the risk of ruining the fat itself, the artisan may wish to work at a low temperature, such as 20 °C, or 25°C, 27 °C, 28 °C, 29 °C, 30 °C, 31 °C, 32 °C, 33 °C or even 34 °C, and at an as short mixing time as possible, such as a few minutes, such as 1, 2, 3, 4, 5, 6, 7, 8, 9, 10,11, 12, 13, 14, 15, 20minutes, or up to 0.5h or even 1h. This is both economical and time saving.

Sometimes, even a shorter mixing time is used and desired such as 1, 2, 5, 10, 15, 20, 30, 40, 50 minutes. Since the mixing time and temperature seems not to correlate, any temperature above ambient temperature that is convenient in relation to what is used in the rest of the process, such as the separation, may be used e.g. such as above 20 °C, or 25°C such as 30, 40, 50, 60, 65 or even 70, 80, 90 or even 100°C may be used and even a shorter mixing time e.g. 1h, 0.5h, 20 minutes or below, such as 15, 12, 10, 8, 5, 4, 3, 2, 1.5 or even 1 minute(s). Mixing speed may also affect the time for mixing and it is readily apparent for some on skilled in the art to balance temperature, mixing time and mixing speed for the purpose. Generally, the mixing time and temperature in the method according to the inventors does not seem to affect the process in a dramatic way, which was a surprise to the inventors (see Examples). The process may also be a continuous process when found convenient.

In some embodiments, the mixing time is some few hours, like 1, 2, 3, 4, 5, 6h at 60°C.

In one particular embodiment, mixing time is 4h at 60 °C.

In another embodiment, the mixing time is 1h at 60 °C, 0.5h at 60 °C or even 10 minutes at 60 °C.

In a further embodiment, mixing time is 4h at 40 °C.

In still a further embodiment, mixing time is 1h at 40 °C, 0.5h at 40 °C or even 10 minutes at 40 °C.

In still a further embodiment, mixing time is 1h at 25 °C, 0.5h at 25 °C or even 10 minutes at 25 °C.

Below 20 or 25 °C mixing may become unhandy since the fats used may solidify and thereby the mixing may not be complete.

Said process may further comprise the step of before pressing emulsifier, such as STS and lecithin, milk solid, milk fat, salt, enzyme, such as an enzyme for interesterification, or any other ingredient within confectionary, such as compound or chocolate making, baking and food industry that blend and may pass the mixing temperatures and mixing times. Such ingredient is chosen by the skilled artisan according to its desired purpose.

In a further embodiment, STS is added to fat phase 2 before mixing with the cocoa biomass, including but not limited to cocoa liquor (CLi) and cocoa powder (CPo). STS is a bloom inhibitor and may be added to give further value to fat phase 3, upon mixing. STS is an emulsifier which does not affect the mixing and separation in any way, and will remain in fat phase 3, i.e. the modified fat phase, after mixing and separation, both in the removed phase and in the separated cocoa biomass, including but not limited to cocoa liquor (CLi) and cocoa powder (CPo), comprising a modified fat phase, i.e. fat phase 3, at a desired fat level.

Said fat phase 2, i.e. an at least one vegetable fat, used in the process is at least one other vegetable fat but cocoa butter. Thus, in further embodiments, the process and all its embodiments are wherein said fat phase 2 is at least one selected from the group consisting of palm oil, palm kernel oil, sheanut oil, sunflower oil, rape seed oil, soybean oil, coconut oil and fractions thereof, such as e.g. palm kernel stearin, palm mid fractions, palm oleins , shea stearin and oleins etc.

In further embodiments, said fat phase 2 is a liquid oil with a melting point below 20°C, such as rape seed oil, high oleic sun flower oil or sun flower oil.

In some embodiments fat phase 2 may be interestrified and/or hydrogenated before used in this process, all dependent on the decided functionality in the final cocoa powder. In further embodiments of the process, fat phase 1 and fat phase 2 is interesterified and/or hydrogenated when mixed as fat phase 3, before separation of the cocoa biomass. The interesterification may be done chemically or enzymatically according to known means in the art.

By the choice of fat phase 2 a desired fat profile of fat phase 3 may be chosen, thus giving fat phase 3 desired characteristics and functionalities.

In one embodiment, health profile of the cocoa biomass, including but not limited to cocoa liquor (CLi) and cocoa powder (CPo) with a modified fat phase may also be considered. For example, by choosing rape seed oil as the at least one vegetable fat to be blended with the cocoa powder, a cocoa powder with a modified fat phase is achieved with less saturated fats in the final cocoa powder compared to the starting cocoa powder with unmodified fat phase. Further embodiments make use of vegetable oils providing special fatty acids like omega-3 and omega-6. Such vegetable oils are for example rape seed oil, linseed oil, walnut oil, sea bukthorn seed oil, chia seed oil and hemp oil. Omega-3 and omega-6 are described as essential fatty acids with a health aspect in the art.

Further embodiments include that the at least one vegetable fat is a CBS, CBR or CBE. CBS and CBR are known to add value to a fat composition like better bloom, decreasing eutectic effect, heat resistance and texture/sensory characteristics compared to CB. Also better gloss, less recrystallization/agglomeration in spread type filings is addressed by choice of vegetable fat phase 2 such as by using a liquid oil in fat phase 2. A wide variety of CBS, CBR and CBE are commercially available from eg AAK AB (www.aak.com, e.g. Akopol^{™}, Silco^{™}, and CEBES^{™}) as well as other sources like Cargill (www. cargill.com) and DeltaWilmar CIS (www.deltawilmar.com).

Further, a lauric based compound, such as a CBS, is normally not compatible with the cocoa butter in cocoa powder. By using a cocoa biomass according to the invention, including but not limited to cocoa liquor (CLi) and cocoa powder (CPo), with a modified fat similar to CBS, a much better compatibility with cocoa biomass, such as but not limited to CLi or CPo, is seen as compared to unmodified cocoa biomass and less and even no eutectic effect may be seen compared to what is normally observed when combining cocoa biomass, such as CLi or CPo, and CBS. Thus, further embodiments are wherein fat phase 2 is a CBS.

If lauric CBS is used at fat phase 2 in the process according to the invention, then lauric-based CBS derived from palm kernel oil or cocoa nut oil, or any fraction thereof such as e.g. palm kernel stearin with similar physical properties as cocoa butter is used. The palm kernel stearin may be hydrogenated and/or interestrified or not when used as the at least one fat in the process as described here in. Such a CBS provides good texture and may be used in solid chocolate or compound products.

If a CBR is the fat phase 2 in the process described according to the invention it is generally from oils such as palm oil soybean oil, cottonseeds oil and peanut oil but in some cases it can also be added some content of lauric based oils. They may be hydrogenated or not to give the correct hardness desired for its particular application and may then be used as coatings f.ex. for many kinds of centers like: bisquits, donuts, cakes, bars and fat fillings. Thus, further embodiments are wherein fat phase 2 is a CBR.

If the modified cocoa biomass of the invention is to be used in or as a CBE (CBI), the fat phase 2 in the process described according to the invention may be symmetrical unsaturated triacylglycerols similar to that of cocoa butter, such as a palm mid fraction (PMF) blended with illipe and/or shea fats.

Some embodiments use an interestrified fully hydrogenated palm kernel oil (Rx FH PKO) as fat phase 2 in the process as described herein. It will provide cocoa biomass, including but not limited to a cocoa powder or cocoa liquor, with enhanced bloom stability when used in a coating based on Rx FH PKO.

In one embodiment, fat phase 2 is a CBS.

In a further embodiment, fat phase 2 is a CBR.

In still a further embodiment, fat phase 2 is a CBE.

In even still further embodiments, fat phase 2 is a rape seed oil or a sunflower oil. This is particularly useful for spreads and fillings to add more cocoa taste and retard re-crystallization, as well as for lowering the content of SAFA thus combining functional features with health aspects of the final modified cocoa biomass, including but not limited to cocoa liquor or cocoa powder.

In further embodiments of the process, said method may further comprise the step of c) interesterifying, chemically or enzymatically, said cocoa biomass with fat phase 3, i.e. the modified fat phase after the steps a) mixing and b) separating in the process according to the invention. Interesterifying the remaining fat phase 3 in the cocoa biomass, i.e. with the modified fat phase, may add further benefits and change the characteristics to the cocoa biomass, including but not limited to cocoa liquor (CLi) and cocoa powder (CPo), in a desired way, such improve boom retarding, improve texture, improve sensory aspects, improve heat stability etc. all depending on the fat phase 2 used to substitute fat phase 1, e.g. CB in the cocoa biomass, including but not limited to cocoa liquor (CLi) and cocoa powder (CPo)

In another aspect of the present invention it is provided uses of the process as described herein in all its embodiments for preparing a cocoa biomass, including but not limited to cocoa liquor (CLi) and cocoa powder (CPo), with a modified fat phase compared to unmodified cocoa biomass with only fat phase 1, being CB.

In a further aspect it is provided a cocoa biomass, including but not limited to cocoa liquor (CLi) and cocoa powder (CPo), with a modified fat phase prepared using the process as described herein in any of its embodiments. Thus, in still a further aspect there is provided a cocoa biomass, including but not limited to cocoa liquor (CLi) and cocoa powder (CPo), with a modified fat phase compared to unmodified cocoa biomass.

Still even further aspects provide a fat composition for an edible product comprising a cocoa biomass, including but not limited to cocoa liquor (CLi) and cocoa powder (CPo), with the modified fat phase prepared using the process as described herein in all its embodiments or a cocoa biomass, including but not limited to cocoa liquor (CLi) and cocoa powder (CPo), with a modified fat phase prepared using the process as described herein in any of its embodiments or a cocoa biomass, including but not limited to cocoa liquor (CLi) and cocoa powder (CPo), with a modified fat phase compared to unmodified cocoa biomass, including but not limited to cocoa liquor (CLi) and cocoa powder (CPo). In further embodiments, the at least one fat composition is a cocoa butter replacer (CBR), a cocoa butter substitute (CBS), or a cocoa butter equivalent (CBE) or any of the other embodiments described herein, for example in the process described herein or Examples.

A further aspect of the present invention provides uses of a cocoa biomass, including but not limited to cocoa liquor (CLi) and cocoa powder (CPo), with a modified fat phase prepared by the process described herein and all its embodiments, or a cocoa biomass, including but not limited to cocoa liquor (CLi) and cocoa powder (CPo), with modified fat phase as described herein, or a fat composition in an edible product as described herein.

Said uses include wherein the fat composition comprising the cocoa biomass with a modified fat phase is a CBE, a CBR or a CBS.

Said edible product may in further embodiments be a confectionary product, a dairy product, or a bakery product, or any combination thereof such as a such as a coated cookie.

Said confectionary product may be a filling, a spread, compound, a chocolate or a chocolate coating. Particularly, such chocolate may have a cocoa biomass, including but not limited to cocoa liquor (CLi) and cocoa powder (CPo), with a modified fat phase similar as a CBR or a CBS, as described herein.

Thus, in still a further aspect herein is described an edible product comprising a cocoa biomass, including but not limited to cocoa liquor (CLi) and cocoa powder (CPo), with modified fat phase prepared using the process as described herein in all its embodiments, or the modified cocoa biomass, including but not limited to cocoa liquor (CLi) and cocoa powder (CPo), as described herein in all its embodiments, or the fat composition as described herein in all its embodiments. Said edible product may thus be a dairy product, a confectionary product or a bakery product or any combination thereof such as a coated cookie.

When said edible product is a dairy product, it may be one selected from the group consisting of a milk, such as a chocolate milk, a margarine, a butter blend, a liquid cream, a whipping cream, a sour cream, a hard or soft cheese, a processed cheese, a fresh cheese, a yoghurt and an ice cream.

When said edible product is a confectionary product, it may be a chocolate, a compound, a filling, a filled chocolate product, filled and topped confectionary products, a spread, a coating, a molded tablet of compound or chocolate, a cream, a frozen product, such as an ice cream, a culinary product, including filled and topped culinary products, a dough or a baked product, a solid fat ingredient for food products.

When said edible product is a bakery product, it may be a dough, a baked product, a biscuit, a cookie, a donut, or an extruded product.

If said edible product is a compound or chocolate said compound or chocolate may comprise between 2 and 50wt% by weight of modified cacao biomass, such as CLi and/or CPo, such as between 2 and 40% by weight, such as between 2 and 30wt% by weight of modified cacao biomass, e.g. CLi and/or CPo, or such as between 5 and 20wt% by weight of modified cacao biomass such as e.g. CLi and/or CPo, such as between 10 and 20wt% by weight of modified cacao biomass such as e.g. CLi and/or CPo, or such as between 5 and 10wt% by weight of modified cacao biomass such as e.g. CLi and/or CPo. In certain embodiments, said chocolate comprise 2.5, 5, 7.5, 10, 12.5, 15, 17.5, 20, 22.5, 25, 27.5 or 30wt% by weight of modified cacao biomass such as e.g. CLi and/or CPo.

As for compounds and chocolates, since no eutectic effect is seen, a higher amount of modified cacao biomass may be used in all edible food products than normally used. Examples are between 2-100wt% of the fat phase may be the fat of the modified cacao biomass according to the invention, such 2, 5, 10, 15, 20, 25, 30, 40, 50, 60, 70, 80, 90 or even 100wt% of the fat phase, adjusted of course to the fat level of the modified cocoa biomass.

Non-limiting examples which embody certain aspects of the invention will now be described.

### EXAMPLES

### Example 1

Three different fat containing biomasses has been analyzed for fat content and fatty acid composition. Also, the vegetable fat which is used in this example as fat phase 2 has been analyzed for fatty acid composition as well. In this example an interesterified hydrogenated palm kernel oil (IV 1) (Rx(Hd PKO IV 1)) is used as fat phase 2.

Table 1 shows the content of six fatty acids which represent >90% of the vegetable fat and > 75% of the milk fat in the three different biomasses used.

**Table 1**

| | Fatty acid composition in fat phase³ (wt%) | | | |
|---|---|---|---|---|
| | Cocoa Powder D-11-A⁶ | Refined hazel nut powder⁴ | Spray whole milk powders | Rx(Hd.PKO IV 1) |
| Fat content % | 11.3² | 48 | 26.1¹ | 100 |
| C12:0 | 0 | 0 | 3.5 | 45.6 |
| C14:0 | 0.1 | 0 | 11.0 | 15.7 |
| C16:0 | 25.5 | 5.0 | 31.2 | 9.2 |
| C18:0 | 36.2 | 1.8 | 10.4 | 20.7 |
| C18:1 cis sum | 33 | 73.9 | 20.3 | 1.1 |
| C18:2 cis sum | 3 | 18.9 | 1.8 | 0 |

| | | | | |
|---|---|---|---|---|
| ¹ Extraction Röse Gottlieb, ISO 8381:1987 ² Extraction, SBR , NMKL nr. 131.1989 modified, all Examples herein ³ FAC,IUPAC 2301 & IUPAC 2304, all Examples herein ⁴Hazelnut Flour, Bob's Red Mill ⁵Spray dried whole milk powder, DANO, Arla Foods amba ⁶Cocoa powder 10/12 DP Alkalized 10-12% CB, Barry Callabaut, all Examples herein | | | | |

The three blends are mixed with fat phase 2 (Rx(Hd PKO IV 1) in a Varimixer Teddy W5A with water jacket for 4 hours at 60°C, see Table 2.

**Table 2**

| Blend | I | II | III |
|---|---|---|---|
| Cocoa powder D-11-A,(11.3% fat) | 250.2 gram | | |
| Hazel nut Powder, (48.0% fat) | | 200.5 gram | |
| Whole milk powder, ( 26.1% fat) | | | 201.2 gram |
| Rx ( Hd. PKO IV1) | 705.0 gram | 1001.5 gram | 1005 gram |

After blending and mixing the mixture is pressed by using a screw press to get a press cake with a fat content and composition as written in table 3. Temperature during the pressing process is 60 °C.

**Table 3**

| | Fatty acid composition in pressed cake (wt%) | | | | | |
|---|---|---|---|---|---|---|
| | Cocoa cake ( fat content 37.1%) | | Hazel cake ( fat content 61%) | | Milk cake (fat content 40.3%) | |
| | Analyzed | Calculated | Analyzed | Calculated | Analyzed | Calculated |
| C12:0 | 43.4 | 43.8 | 34.8 | 41.6 | 23.8 | 43.5 |
| C14:0 | 14.9 | 15.1 | 12.0 | 14.3 | 13.3 | 15.5 |
| C16:0 | 9.9 | 9.9 | 8.3 | 8.8 | 20.6 | 10.3 |
| C18:0 | 21.3 | 21.3 | 16.3 | 19 | 15.1 | 20.2 |
| C18:1 cis sum | 2.4 | 2.3 | 17.8 | 7.5 | 11.0 | 1.1 |
| C18:2 cis sum | 0.4 | 0.1 | 5.1 | 1.7 | 1.0 | 0.1 |

The analyzed value is the content and composition of fatty acids in the fat phase from the pressed cake (fat phase 3), representing a mixture of fat phase 1 in the starting biomass and fat phase 2, while the theoretical content is calculated as if all fat from fat phase of the original biomass is freely mixed with the added vegetable fat used as fat phase 2.

The pressed cakes represent three biomasses with a modified fat phase (fat phase 3) content as compared to the biomass before mixing with fat phase 2. However, as could be seen in Table 2, only the cocoa cake remain a fat profile as could be expected from mixing cocoa powder with fat phase 1 being cocoa butter and fat phase 2 (Rx(Hd PKO IV 1). The two other biomasses, the hazel nut powder and the milk powder, will not give a new fat phase (fat phase 3) as could be theoretically expected, but is drastically modified compared to its theoretical value. The hazel nut powder and the milk powder are thus to be considered as reference samples.

### Conclusions

It's surprisingly found that it is possible to mix cocoa powder as biomass with another vegetable fat in a pre-chosen ratio at 60°C for 4 hours and then press most of the fat out again and get a cake which fat composition that is a blend of the vegetable fat (fat phase 2) and the original cocoa butter (fat phase 1) from powder in mostly the same ratio as a theoretical mix of the two fats without the solid parts of a biomass would give. This is true only for the cocoa biomass and not the other biomass sources of vegetable and non-vegetable origin, and is in this experiment only unique for the cocoa biomass.

### Example 2

In this examples, different mixing temperatures and mixing times are tested. All blends are mixed in a Varimixer Teddy W5A with water jacket and Cocoa powder D-11-A is used as biomass. Cocoa powder with CB as fat phase 1 and the vegetable fat used as fat phase 2 are the same as used in example 1.

Five different blends are tested according to table 4.

**Table 4**

| Blend | | IV | V | VI | VII | VIII |
|---|---|---|---|---|---|---|
| Mixing time | Hours | 1 | 1 | 4 | 4 | 4 |
| Mixing temperature | °C | 40 | 60 | 40 | 60 | 90 |
| Cocoa powder D-11-A gram | | 250.2 | 251.1 | 251.1 | 250.2 | 250.5 |
| Veg. Fat Rx(Hd. PKO IV 1) | gram | 703.7 | 703.8 | 707.4 | 705.0 | 710.8 |

Blends IV to VIII are filtered in a Büchner funnel with a vacuum of 50mbar by using a Whatmann, grade 1, qualitative, 125mm Ø,Cat No 1001125 filter paper after finish the mixing time.

The fat from the filter cake is extracted afterwards and the fat phase analyzed for fatty acids content. Filtering temperature during the process is the same as the mixing temperature.

Table 5 shows the analyzed content of the six fatty acids representing > 85% of the fat phase extracted from the filter cakes and the theoretical calculated content as if all fat from the cocoa powder fat phase is just mixed with the added vegetable fat used as fat phase 2 (according to table 4).

**Table 5**

| Fatty acid composition in pressed cake (wt%) | | | | | | | | | | |
|---|---|---|---|---|---|---|---|---|---|---|
| Blend | IV | | V | | VI | | VII | | VIII | |
| | Analysed | Calculated | Analysed | Calculated | Analysed | Calculated | Analysed | Calculated | Analysed | Calculated |
| C12:0 | 44.1 | 43.8 | 44.0 | 43.8 | 44.0 | 43.8 | 43.8 | 43.8 | 44.1 | 43.9 |
| C14:0 | 15.1 | 15.1 | 15.1 | 15.1 | 15.1 | 15.1 | 15.1 | 15.1 | 15.1 | 15.1 |
| C16:0 | 9.8 | 9.8 | 9.8 | 9.8 | 9.8 | 9.8 | 9.8 | 9.8 | 9.9 | 9.8 |
| C18:0 | 21.1 | 21.3 | 21.2 | 21.3 | 21.2 | 21.3 | 21.4 | 21.3 | 21.4 | 21.3 |
| C18:1 cis sum | 2.3 | 2.3 | 2.2 | 2.3 | 2.3 | 2.3 | 2.2 | 2.3 | 2.2 | 2.3 |
| C18:2 cis sum | 0.3 | 0.1 | 0.3 | 0.1 | 0.3 | 0.1 | 0.3 | 0.1 | 0.3 | 0.1 |

### Conclusions

The calculated and analyzed value are substantially the same pair by pair for all 5 trials. It shows that all cocoa butter (fat phase 2) in cocoa powder is all mixed together with the vegetable fat (fat phase 1) in all trial.

It means that different combination of mixing temperature and mixing time between 40°C and 90°C and 1 and 4 hour, has little impact on the final fat mixture (fat phase 3) in the filtered/pressed cake.

### Example 3

In this example, cocoa liquor and cocoa powder is mixed with sunflower oil.

All are mixed in a Varimixer Teddy W5A with water jacket to form blends/mixes IX, X and XI, see Table 6.

**Table 6**

| Blend | | IX | X | XI |
|---|---|---|---|---|
| Mixing time | Hours | 4 | 4 | 4 |
| Mixing temperature | °C | 60 | 60 | 25 |
| Cocoa powder D-11-A | gram | 250.4 | 0.0 | 250.2 |
| Cocoa Liquid | gram | 0.0 | 409.8 | 0.0 |
| High oleic sunflower oil | gram | 714.7 | 2004.7 | 709.2 |

Blends IX to XI are filtered in a Büchner funnel with a vacuum of 50mbar by using a Whatmann, grade 1, qualitative, 125mm Ø,Cat No 1001125 filter paper after finishing the mixing time. Filtering temperature is the same as the mixing temperature.

The fat from filter cake, i.e. fat phase 3, is extracted afterwards and the fat phase and oil from filtering are analyzed for fatty acid content.

Table 7 shows the content of fatty acids representing > 95% of the fat phase extracted from the filter cakes and the fat phase in the oil after filtering.

**Table 7**

| | Main fatty acid composition in oil from cake and oil after filtering (wt%) | | | | | |
|---|---|---|---|---|---|---|
| | Fat phase from cake after mixing and filtering | | | Oil from filtering | | |
| Blend | IX | X | XI | IX | X | XI |
| C16:0 | 4.4 | 5.8 | 4.3 | 4.2 | 5.8 | 4.3 |
| C18:0 | 4.2 | 6.3 | 4.1 | 4.0 | 6.3 | 4.1 |
| C18:1 cis sum | 81.8 | 78.6 | 81.8 | 81.8 | 78.4 | 81.7 |
| C18:2 cis sum | 7.5 | 7.1 | 7.6 | 7.7 | 7.4 | 7.7 |

**Table 8**

| | Mono unsaturated TAGs (wt%) | | | | | | |
|---|---|---|---|---|---|---|---|
| | High oleic sunflower oil | Fat phase in cocoa powder and Cocoa liquid | | | Fat Phase in Cocoa cake after mixing and filtering | | |
| Blend | | IX | X | XI | IX | X | XI |
| POP | 0.3 | 15.3 | 15.1 | 15.2 | 0.8 | 1.7 | 0.8 |
| POSt | 0.4 | 38.0 | 38.2 | 38.0 | 1.6 | 4.1 | 1.7 |
| StOSt | 0.1 | 27.7 | 27.9 | 27.8 | 1.0 | 2.7 | 1.0 |
| Sum SatOSat | 0.8 | 81.0 | 81.2 | 81.0 | 3.4 | 8.5 | 3.5 |

### Conclusions

Comparing the main fatty acid composition in the fat phase of the cake oil and the filter oil in the three different blends/mixes it can be concluded that in all three cases the oil from cakes and the filter oil are mostly identical (Table 7).

It is possible to substitute the cocoa butter in both cocoa powder and cocoa liquid with a high oleic sunflower oil in the same ratio as the two oil are just mixed without the solids from the biomass (cocoa liquor and cocoa powder).

25°C mixing temperature gives the same results as 60°C mixing temperature, thus there is no effect of raising temperature.

Table 8 shows a high reduced content of mono unsaturated TAGS in the cocoa cake after filtering/pressing. Also, the total content of SatOSat is significant reduced in the cocoa cake compare the cocoa powder / cocoa liquid. Thus, a healthier profile of the new, modified fat phase 3 in the cocoa cake after pressing is seen compared to the initial cocoa butter.

### Example 4

This example shows a decrease in eutectic effect after modifying the fat phase of a cocoa powder.

Full hydrogenated Palm kernel oil (F.H. PKO + STS) is mixed with Cocoa powder D-11-A in a Varimixer Teddy W5A with water jacket, se table 9 for blend/mix XII.

**Table 9**

| Blend | | XII |
|---|---|---|
| Mixing time | Hours | 4 |
| Mixing temperature | °C | 60 |
| Cocoa powder D-11-A | gram | 251.0 |
| Veg. Fat. FH PKO IV 0 +2% STS | gram | 1401.5 |

Blends XII are filtered in a Büchner funnel with a vacuum of 50mbar by using a Whatmann, grade 1, qualitative, 125mm Ø, Cat No 1001125 filter paper after mixing.

Filtering temperature is 60C.

The fat from filter cake are extracted afterwards and the fat phase and oil from filtering are analyzed for fatty acid content.

Table 10 shows the content of the six main fatty acids in the fat phase extracted from the filter cakes (fat phase 3) and the oil, that is removed, after filtering. Table 10 shows that the cocoa butter from cocoa powder and the F.H. hydrogenated PKO is homogenous mixed, both in the fat phase of the biomass (fat phase 3) and in the after pressing/filtering discarded separated oil mix.

**Table 10**

| Blend | XII | |
|---|---|---|
| | **Fat XII a** FAC of fat phase in oil extracted from the Cocoa cake after filtering (wt%) | **Fat XII b** FAC of oil after filtering (wt%) |
| C12:0 | 45 | 44.9 |
| C14:0 | 15.5 | 15.5 |
| C16:0 | 9.8 | 9.8 |
| C18:0 | 21.4 | 21.4 |
| C18:1 cis sum | 1.0 | 1.1 |
| C18:2 cis sum | 0.1 | 0.1 |

Further, as seen below in Table 11 and Table 12, a cocoa cake with a modified fat phase Fat XII a and b significantly reduces the eutectic effect in a compound based on a lauric fat (Table 12) compared to when unmodified cocoa powder with cocoa butter is used (Table 11).

In table 11 the eutectic effect of different mixtures of F.H.PKO + 2% STS and Cocoa butter is analyzed as solid fat content IUPAC 2.150a.

**Table 11**

| | | | | | | | | |
|---|---|---|---|---|---|---|---|---|
| F.H. PKO + 2% STS (wt%) | 100 | 95 | 90 | 80 | 65 | 50 | 30 | 0 |
| Cocoa butter (wt%) | 0 | 5 | 10 | 20 | 35 | 50 | 70 | 100 |
| | | | | | | | | |
| IUPAC 2.150a 20°C | 86.3 | 82.7 | 79.8 | 73.8 | 63.5 | 54.5 | 42.9 | 61.6 |
| IUPAC 2.150a 25°C | 67.8 | 62.4 | 57.9 | 50.8 | 40.5 | 28.6 | 17.4 | 32.2 |
| IUPAC 2.150a 30°C | 37.9 | 34.8 | 32 | 26.2 | 17 | 11 | 7.6 | 1.7 |
| IUPAC 2.150a 35°C | 11.9 | 10.7 | 9.8 | 8.3 | 6.4 | 4.7 | 2.6 | 0 |

In table 12 different mixtures of F.H.PKO + 2% STS and fat XII, i.e. a cocoa powder with a modified fat phase according to Table 9, are analyzed for solid fat content IUPAC 2.150a to analyze eutectic effect, which, as could be seen in Table 12 is absent.

**Table 12**

| | | | | | | | | |
|---|---|---|---|---|---|---|---|---|
| F.H. PKO+ 2% STS (wt%) | 100 | 95 | 90 | 80 | 65 | 50 | 30 | 0 |
| XII a fat (wt%) | 0 | 5 | 10 | 20 | 35 | 50 | 70 | 100 |
| | | | | | | | | |
| IUPAC 2.150a 20°C | 86.3 | 86.2 | 86.6 | 86.9 | 86.7 | 86.2 | 85.8 | 85.5 |
| IUPAC 2.150a 25°C | 67.8 | 68.0 | 67.9 | 67.6 | 67.3 | 67.0 | 66.6 | 65.8 |
| IUPAC 2.150a 30°C | 37.9 | 37.7 | 37.7 | 37.4 | 37.3 | 36.9 | 36.7 | 36.0 |
| IUPAC 2.150a 35°C | 11.9 | 12.0 | 11.9 | 11.7 | 11.6 | 11.5 | 11.3 | 11.2 |

### Conclusions

Eutectic effect is significantly reduced when mixing a cocoa cake with a modified fat phase as in this case being cocoa powder with 11% fat XII a together with a F.H. PKO with 2% STS (Table 12) compared to when mixing with a standard cocoa powder with 11% cocoa butter (Table 11).

A standard compound recipe has typically from 10 - 25% cocoa powder and a total fat content of 28- 35% fat which often makes the content of cocoa butter in the total fat phase critical. By use of a cocoa biomass with a modified fat phase, in this Example a cocoa powder with cocoa butter exchanged to F.H. PKO with 2% STS, the eutectic effect - which is normally seen - could be avoided over all % of added modified cocoa powder.

Maximum 5% cocoa butter in fat phase is normally recommended in a compound recipe based on a CBS but even at that level table 11 and 12 shows a big different by using standard cocoa butter (Table 11) or a cocoa cake with a fat phase like XII (Table 12). By using a cocoa powder with a modified fat phase, a higher amount of cocoa powder may be used, if needed in for example a compound, and still having no eutectic effect (cf Table 11 and Table 12).

### Example 5

A dark compound is made according to the following recipe (wt%) and procedure:

**Table 13**

| **Compound (wt%)** | **A** | **B** | **C** | **D** |
|---|---|---|---|---|
| Vegetable fat ,- Rx ( Hd. PKO IV 1) | 30 | 30 | 0.0 | 0.0 |
| Vegetable fat ,- F.H. PKO +2% STS | 0.0 | 0.0 | 30 | 30 |
| Cocoa powder D-11-A, Reference | 15 | 0.0 | 15 | 0.0 |
| Cocoa cake (11% fat) from blend VII | 0.0 | 15 | 0.0 | 0.0 |
| Cocoa cake (11% fat) from blend XII | 0.0 | 0.0 | 0.0 | 15 |
| Skim milk powder | 6 | 6 | 6 | 6 |
| Sugar | 48.6 | 48.6 | 48.6 | 48.6 |
| | | | | |
| Total fat content | 31.70 | 31.70 | 31.70 | 31.70 |
| | | | | |
| Lecithin | 0.4 | 0.4 | 0.4 | 0.4 |

Cocoa powder, sugar, skim milk powder and a part of the vegetable fat is mixed in a Varimixer Teddy W5A with water jacket at 60°C to a consistence which is possible to refine on a 3 rolls Lehmann refiner to a particle size of approximately 20 micron.

The refined mass is dry chonch at 60°C for 2 hours at high speed ( 3) follow by 4 hours wet chonching with the rest of the vegetable fat added. After about 3.5h lecithin is added.

The compound is cooled down to 42-43°C and deposited into 100 gram moulds and cool 30 min in a 3 zones Blumen cooling tunnel. 10 min at 6°C-> 10 min 5°C -> 10min 14°C.

The 100 gram moulds are kept 1 week at 20°C and then used for bloom test, sensory and texture analyses.

Some compound is used for coating test. Small 3cm x3 cm pieces sponge cakes are coated with compound at 42- 43°C.

Cooled for 15 min in a 3 zones cooling tunnel.

5 min at 6°C-> 5 min 5°C -> 5min 14°C.

All coated product are kept 1 week at 20°C before bloom test start.

All bloom test are made in a 15°C , 20°C and 23°C isothermal cabinet.

The number of weeks before strong bloom is visible on compound surface is listed in table 14.

**Table 14**

| **Compound** | **A** | | **B** | | **c** | | **D** | |
|---|---|---|---|---|---|---|---|---|
| Application | 100 g Tablet | Sponge cakes | 100 g Tablet | Sponge cakes | 100 g Tablet | Sponge cakes | 100 g Tablet | Sponge cakes |
| Bloom 15°C | 6 | 8 | 9 | 12 | 8 | 10 | 12 | 14 |
| Bloom 20°C | 7 | 9 | 10 | 15 | 10 | 12 | 14 | 17 |
| Bloom 23°C | 7 | 9 | 10 | 14 | 7 | 7 | 12 | 13 |

Table 15 shows the hardness of 100 g compound tablet.

Hardness is measure on Texture Analyzer TA2, needle P2N and a penetration depth of 3 mm

**Table 15**

| **Compound** | **A** | | **B** | | **C** | | **D** | |
|---|---|---|---|---|---|---|---|---|
| Application | Gram force Average | Std dev. % | Gram force Average | Std dev. % | Gram forceAv erage | Std dev. % | Gram force Average | Std dev. % |
| Texture 20°C | 566.9 | 2 | 655.1 | 1.7 | 649.8 | 1.2 | 729.1 | 1.9 |
| Texture 30°C | 169.4 | 5.0 | 245 | 3.4 | 273.8 | 5.9 | 289.5 | 7.6 |

### Conclusions

Table 14 shows a significantly improved bloom stability when using the cocoa cake from blend VII and XII compare using standard cocoa powder D-11-A.

B is without bloom in more weeks than A. D is without bloom in more weeks than C. Both B and D is significantly harder, and have more snap than their reference A and C at 20°C which correlate to less eutectic effect by using CPo made with the process according to the invention instead of standard Cocoa powder. Further, B is similarly significantly harder and more heat stable than A at 30°C

### Example 6

Example 6 shows that a modified cocoa powder will provide a chocolate spread with a longer shelf life without any recrystallization, still keeping cocoa taste, by using a cocoa powder with a modified fat phase.

Chocolate spreads in example 6 are made after following recipe and procedure (Table 16):

**Table 16**

| **Chocolate spread** | **E** | **F** | **G** | **H** |
|---|---|---|---|---|
| Vegetable fat, 95% sunflower oil and 5% mixture of (50% F.H Palmstearin + 50% FH. High Erucic rapeseed oil | 22.0 | 19.1 | 18.9 | 15.3 |
| Cocoa powder D-11-A, Reference | 7.5 | 0.0 | 0.0 | 0.0 |
| Cocoa cake (36 % fat) from blend IX | 0.0 | 10.4 | 0.0 | 10.4 |
| Cocoa cake (37% fat) from blend X | 0.0 | 0.0 | 10.6 | 10.6 |
| Skim milk powder | 9.0 | 9.0 | 9.0 | 2.2 |
| Sugar | 48.1 | 48.1 | 48.1 | 48.1 |
| Hazel paste | 13.0 | 13.0 | 13.0 | 13.0 |
| Total fat content | 31.4 | 31.4 | 31.4 | 31.4 |
| | | | | |
| Lecithin | 0.4 | 0.4 | 0.4 | 0.4 |

Cocoa powder, sugar, skim milk powder, hazel nut paste and a part of Vegetable fat is mixed in a Varimixer Teddy W5A with water jacket at 50°C to a consistence which is possible to refine on a 3 rolls Lehmann refiner to a particle size of approximately 20 micron.

The refined mass is dry chonch at 50°C for 2 hours at high speed ( 3) follow by 1 hours wet chonching with the rest of the vegetable fat added. After about 3.5 hours of wet conching lecithin is added.

The chocolate spread are cooled down on a heat exchanger to 32°C and deposited into small 10 grams plastic beakers and cooled 15 min in a 3 zones Blumen cooling tunnel according to the following:
5 min at 15°C-> 5min 15°C -> 5min 15°C

The small plastic beakers are kept at 20°C for 24 hours and then stored at four different temperature for re-crystallization test:
5°C, 10°C, 15°C and 20°C isothermal.

All four are tested for sensory after 1 week, 2 week, 4 week, 8 weeks, 12 weeks. In table 17 all results are found:

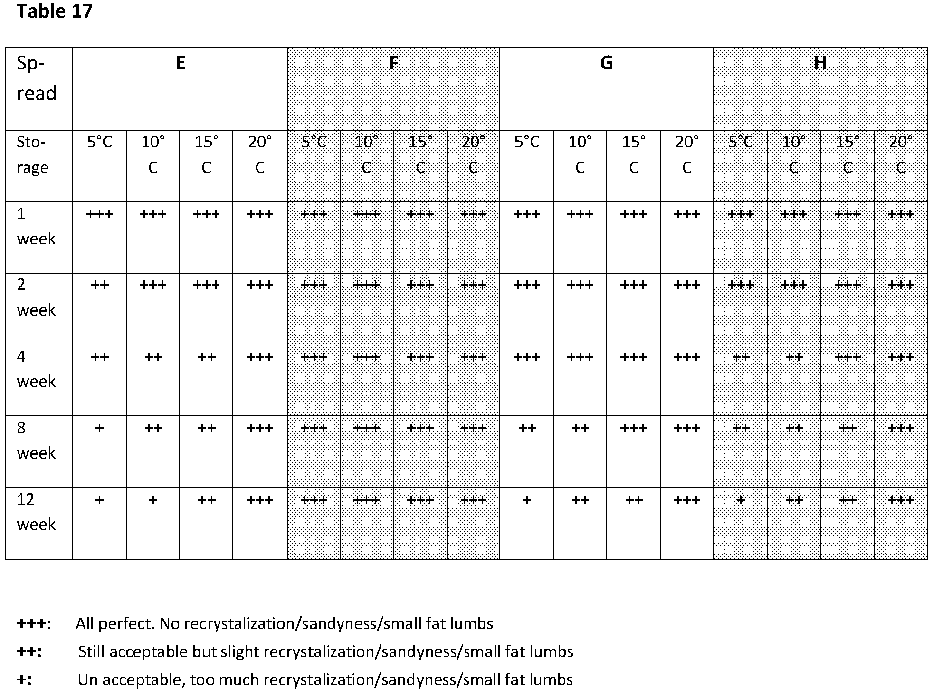

**Table 18**

| **Chocolate spread** | **E** | **F** | **G** | **H** |
|---|---|---|---|---|
| % Fat free Cocoa solid in chocolate spread | 6.7 | 6.7 | 6.7 | 13.4 |
| Sum SatOSat in chocolate spread fat phase % | 2.1 | 0.4 | 1.1 | 1.5 |

### Conclusions

It's possible to reach the same cocoa taste and keep a long shelf life without any recrystallization by using a modified Cocoa cake from blend IX instead of a standard cocoa powder, compare results from recipe F against E.

It is possible too to get a much stronger cocoa taste and still get a significant better shelf life regarding recrystallization at lower storage temperature by changing from a standard cocoa powder to a mixture of modified cocoa mass cake and cocoa powder cake, compare E and H in table 17 and 18.

It is possible to introduce a more pleasant cocoa taste and get a better shelf life at lower storage temperature by changing from a standard cocoa powder to a modified Cocoa mass cake, see e.g. E and G in table 17 .

## Claims

1. A process for preparing a cocoa biomass with a modified fat phase, said process comprising the steps of
a. mixing cocoa biomass having a fat phase 1, wherein said fat phase is cocoa butter (CB), with a vegetable fat phase 2, said fat phase 1 and fat phase 2 forming a modified fat phase 3 in the mixture,
b. separating the cocoa biomass from modified fat phase 3 to a desired fat level, wherein the desired fat level is 0.1-70 wt% of said cocoa biomass, wherein said cocoa biomass now have a residual modified fat phase 3 at a desired fat level replacing fat phase 1 and wherein excess of fat phase 3 is removed, and wherein the residual modified fat phase 3 is substantially a combination of fat phase 1 and fat phase 2, and
c. optionally, repeating step a) and b) above,
wherein the vegetable fat phase 2 is not CB.

2. The process according to claim 1, wherein the desired fat level is 0.1-30 wt% of said cocoa biomass.

3. The process according to any of claims 1-2, wherein said fat phase 1 and fat phase 2 is mixed in a weight ratio of 1:1 to 1:1000 of fat phase 1: fat phase 2 or in a ratio of 1:1 to 1000:1 of fat phase 1:fat phase 2.

4. The process according to any of claims 1-3, further comprising adding at least one selected from the group consisting of emulsifiers, milk solid, milk fat, salt, enzyme, such as an enzyme for interesterification, any other ingredient within confectionary, such as compound or chocolate making, baking and food industry.

5. The process according to any of claims 1-4, wherein said vegetable fat phase 2 is at least one selected from the group consisting of palm oil, palm kernel oil, shea oil, sunflower oil, rape seed oil, soybean oil, coconut oil, and fractions thereof.

6. The process according to any of claims 1-5, wherein said vegetable fat phase 2 is hydrogenated and/or interesterified.

7. The process according to any of claims 1-6, wherein said mixing is for 0.5 to 6 h, such as continuous mixing for 0.5 to 6 h.

8. The process according to any of claims 1-7, wherein said mixing is done at 25 to 60°C.

9. The process according to any of claims 1-8, said method further comprising the step of interesterifying said fat phase 3 with modified fat profile together with the cocoa biomass.

10. The process according to any of claims 1-9, wherein fat phase 1 is CB and fat phase 2 is a cocoa butter replacer (CBR) or a cocoa butter substitute (CBS).

11. A cocoa biomass with a modified fat phase compared to unmodified cocoa biomass prepared using the process of claims 1-10.

12. A fat composition for an edible product comprising cocoa biomass with a modified fat phase prepared using the process according to any of claims 1-10, or the cocoa biomass of claim 11.

13. Use of a cocoa biomass with a modified fat phase prepared by the process according to any of claims 1-10, or the cocoa biomass according to claim 11 or the fat composition of claim 12 in an edible product, such as a confectionary product, a dairy product or a bakery product.

14. An edible product, such as a dairy product, a confectionary product or a bakery product, comprising the cocoa biomass with modified fat phase prepared using the process of claims 1-10, or the cocoa biomass according to claim 11, or the fat composition according to claim 12.

## Patentansprüche

1. Verfahren zur Herstellung einer Kakaobiomasse mit einer modifizierten Fettphase, wobei das Verfahren die folgenden Schritte umfasst:
a. Mischen von Kakaobiomasse, die eine Fettphase 1 aufweist, wobei die Fettphase Kakaobutter (CB) ist, mit einer Pflanzenfettphase 2, wobei die Fettphase 1 und Fettphase 2 eine modifizierte Fettphase 3 in dem Gemisch bilden,
b. Trennen der Kakaobiomasse von der modifizierten Fettphase 3 bis zu einem gewünschten Fettgehalt, wobei der gewünschte Fettgehalt 0,1-70 Gew.-% der Kakaobiomasse beträgt, wobei die Kakaobiomasse nun eine restliche modifizierte Fettphase 3 mit einem gewünschten Fettgehalt, die Fettphase 1 ersetzt, aufweisen, und wobei überschüssige Fettphase 3 entfernt wird, und wobei die restliche modifizierte Fettphase 3 im Wesentlichen eine Kombination aus Fettphase 1 und Fettphase 2 ist, und
c. gegebenenfalls Wiederholen von obigem Schritt a) und b), wobei die Pflanzenfettphase 2 nicht CB ist.

2. Verfahren nach Anspruch 1, wobei der gewünschte Fettgehalt 0,1-30 Gew.-% der Kakaobiomasse beträgt.

3. Verfahren nach einem der Ansprüche 1-2, wobei die Fettphase 1 und Fettphase 2 in einem Gewichtsverhältnis von 1:1 bis 1:1000 von Fettphase 1: Fettphase 2 oder in einem Verhältnis von 1:1 bis 1000:1 von Fettphase 1:Fettphase 2 gemischt wird.

4. Verfahren nach einem der Ansprüche 1-3, ferner umfassend die Zugabe von mindestens einem, das ausgewählt ist aus der Gruppe bestehend aus Emulgatoren, Milchfeststoff, Milchfett, Salz, Enzym, wie z. B. einem Enzym zur Zwischenveresterung, einem beliebigen anderen Inhaltsstoff in der Süßwaren-, z. B. Mischungen oder Schokolade herstellenden, Backwaren- und Lebensmittelindustrie.

5. Verfahren nach einem der Ansprüche 1-4, wobei die Pflanzenfettphase 2 mindestens eine ist, die ausgewählt ist aus der Gruppe bestehend aus Palmöl, Palmkernöl, Shea-Öl, Sonnenblumenöl, Rapsöl, Sojabohnenöl, Kokosnussöl und Fraktionen davon.

6. Verfahren nach einem der Ansprüche 1-5, wobei die Pflanzenfettphase 2 hydriert und/oder zwischenverestert wird.

7. Verfahren nach einem der Ansprüche 1-6, wobei das Mischen für 0,5 bis 6 Std., wie z. B. kontinuierliches Mischen für 0,5 bis 6 Std., erfolgt.

8. Verfahren nach einem der Ansprüche 1-7, wobei das Mischen bei 25 bis 60 °C erfolgt.

9. Verfahren nach einem der Ansprüche 1-8, wobei das Verfahren ferner den Schritt der Zwischenveresterung der Fettphase 3 mit modifiziertem Fettprofil zusammen mit der Kakaobiomasse umfasst.

10. Verfahren nach einem der Ansprüche 1-9, wobei Fettphase 1 CB ist und Fettphase 2 ein Kakaobutterersatz (CBR) oder ein Kakaobuttersubstitut (CBS) ist.

11. Kakaobiomasse mit einer modifizierten Fettphase im Vergleich zu unmodifizierter Kakaobiomasse, die unter Verwendung des Verfahrens nach Ansprüchen 1-10 hergestellt wird.

12. Fettzusammensetzung für ein essbares Produkt, umfassend Kakaobiomasse mit einer modifizierten Fettphase, die unter Verwendung des Verfahrens nach einem der Ansprüche 1-10 hergestellt wird, oder die Kakaobiomasse nach Anspruch 11.

13. Verwendung einer Kakaobiomasse mit einer modifizierten Fettphase, die durch das Verfahren nach einem der Ansprüche 1-10 hergestellt wird, oder der Kakaobiomasse nach Anspruch 11 oder der Fettzusammensetzung nach Anspruch 12 in einem essbaren Produkt, wie z. B. einem Süßwarenprodukt, einem Molkereiprodukt oder einem Backprodukt.

14. Essbares Produkt, wie z. B. ein Molkereiprodukt, ein Süßwarenprodukt oder ein Backprodukt, umfassend die Kakaobiomasse mit modifizierter Fettphase, die unter Verwendung des Verfahrens nach Ansprüchen 1-10 hergestellt wird, oder die Kakaobiomasse nach Anspruch 11 oder die Fettzusammensetzung nach Anspruch 12.

## Revendications

1. Procédé de préparation d'une biomasse de cacao avec une phase grasse modifiée, ledit procédé comprenant les étapes de
a. mélange d'une biomasse de cacao comportant une phase grasse 1, ladite phase grasse étant du beurre de cacao (CB), à une phase grasse végétale 2, ladite phase grasse 1 et ladite phase grasse 2 formant une phase grasse modifiée 3 dans le mélange,
b. séparation de la biomasse de cacao de la phase grasse modifiée 3 à un taux de graisse souhaité, ledit taux de graisse souhaité représentant 0,1 à 70 % en poids de ladite biomasse de cacao, ladite biomasse de cacao présentant désormais une phase grasse modifiée 3 résiduelle à un taux de graisse souhaité qui remplace la phase grasse 1 et l'excès de phase grasse 3 étant supprimé, et ladite phase grasse modifiée 3 résiduelle étant sensiblement une combinaison de la phase grasse 1 et de la phase grasse 2, et
c. éventuellement, répétition des étapes a) et b) précédentes,
ladite phase grasse végétale 2 n'étant pas du CB.

2. Procédé selon la revendication 1, ledit taux de graisse souhaité représentant 0,1 à 30 % en poids de ladite biomasse de cacao.

3. Procédé selon l'une quelconque des revendications 1 à 2, ladite phase grasse 1 et ladite phase grasse 2 étant mélangées dans un rapport en poids de 1:1 à 1:1000 de la phase grasse 1:la phase grasse 2 ou dans un rapport de 1:1 à 1000:1 de la phase grasse 1:la phase grasse 2.

4. Procédé selon l'une quelconque des revendications 1 à 3, comprenant en outre l'ajout d'au moins un composé choisi dans le groupe constitué par les émulsifiants, la matière sèche du lait, la matière grasse du lait, un sel, une enzyme, telle qu'une enzyme pour l'inter-estérification, tout autre ingrédient dans la confiserie, telle que l'industrie de fabrication de composés ou du chocolat, de la boulangerie ou alimentaire.

5. Procédé selon l'une quelconque des revendications 1 à 4, ladite phase grasse végétale 2 étant au moins une phase grasse choisie dans le groupe constitué par l'huile de palme, l'huile de palmiste, l'huile de karité, l'huile de tournesol, l'huile de colza, l'huile de soja, l'huile de noix de coco, et des fractions de celles-ci.

6. Procédé selon l'une quelconque des revendications 1 à 5, ladite phase grasse végétale 2 étant hydrogénée et/ou inter-estérifiée.

7. Procédé selon l'une quelconque des revendications 1 à 6, ledit mélange durant pendant 0,5 à 6 h, tel qu'un mélange en continu pendant 0,5 à 6 h.

8. Procédé selon l'une quelconque des revendications 1 à 7, ledit mélange étant effectué à une température de 25 à 60°C.

9. Procédé selon l'une quelconque des revendications 1 à 8, ledit procédé comprenant en outre l'étape d'inter-estérification de ladite phase grasse 3 avec un profil gras modifié conjointement à la biomasse de cacao.

10. Procédé selon l'une quelconque des revendications 1 à 9, ladite phase grasse 1 étant du CB et ladite phase grasse 2 étant un succédané de beurre de cacao (CBR) ou un substitut de beurre de cacao (CBS).

11. Biomasse de cacao avec une phase grasse modifiée comparée à une biomasse de cacao non modifiée préparée au moyen du procédé selon les revendications 1 à 10.

12. Composition de graisse destinée à un produit comestible comprenant une biomasse de cacao avec une phase grasse modifiée préparée au moyen du procédé selon l'une quelconque des revendications 1 à 10, ou la biomasse de cacao selon la revendication 11.

13. Utilisation d'une biomasse de cacao avec une phase grasse modifiée préparée par le procédé selon l'une quelconque des revendications 1 à 10, ou de la biomasse de cacao selon la revendication 11 ou de la composition de graisse selon la revendication 12 dans un produit comestible tel qu'un produit de pâtisserie, un produit laitier ou un produit de boulangerie.

14. Produit comestible, tel qu'un produit laitier, un produit de pâtisserie ou un produit de boulangerie, comprenant la biomasse de cacao avec une phase grasse modifiée préparée au moyen du procédé selon les revendications 1 à 10, ou la biomasse de cacao selon la revendication 11 ou la composition de graisse selon la revendication 12.
